# EUROPEAN PATENT APPLICATION

(11) **EP 4 207 931 A1**
(43) Date of publication of application: **05.07.2023**
(21) Application number: 22214662.3
(22) Date of filing: 19.12.2022
(51) Int. Cl.: H04W 76/16, H04W 36/00, H04W 8/18

(54) **METHOD AND DEVICE FOR ADDING 3GPP PDN LEG TO AN MA PDU SESSION WITH NON-3GPP LEG**

(30) Priority: 03.01.2022 US 202263296025 P; 12.12.2022 US 202218079506
(71) Applicant: MediaTek Inc., Hsinchu City 30078 (TW)
(72) Inventor: LIN, Yuan-Chieh, 30078 Hsinchu City (TW)
(74) Representative: Habermann, Hruschka & Schnabel

(57) **Abstract**

A method of handling multi-access, MA, Protocol data unit, PDU, session establishment procedure for adding a 3GPP PDN leg to an MA PDU session already established with a non-3GPP leg, comprising, for a 5GS MA PDU session already established on non-3GPP access (501), upon receipt (503) of an ACTIVATE DEFAULT EPS BEARER CONTEXT REQUEST message for establishing a PDN connection as a user-plane resource for the MA PDU session over 3GPP access, the UE sends (505) an ACTIVATE DEFAULT EPS BEARER CONTEXT REJECT message if any value of at least one of the critical parameters, including the PDN type, ESM cause, PDN address, S-NSSAI, SSC mode, said mode set to SSC mode 1, and APN IEs in the ACTIVATE DEFAULT EPS BEARER CONTEXT REQUEST message does not match, sync or is compatible to the corresponding stored value of the MA PDU session with a non-3GPP leg (504).

## Description

### CROSS REFERENCE TO RELATED APPLICATIONS

This application claims priority under 35 U.S.C. §119 from U.S. Provisional Application Number 63/296,025, entitled "ATSSS adding PDN leg to an MA PDU session already with non-3GPP leg", filed on January 3, 2022, the subject matter of which is incorporated herein by reference.

### TECHNICAL FIELD

The disclosed embodiments relate generally to wireless communication, and, more particularly, to method of Multi-Access (MA) PDU session establishment handling for adding a PDN leg to an MA PDU session established with a non-3GPP leg.

### BACKGROUND

The wireless communications network has grown exponentially over the years. A Long-Term Evolution (LTE) system offers high peak data rates, low latency, improved system capacity, and low operating cost resulting from simplified network architecture. LTE systems, also known as the 4G system, also provide seamless integration to older wireless network, such as GSM, CDMA and Universal Mobile Telecommunication System (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3^{rd} generation partner project (3GPP) network normally includes a hybrid of 2G/3G/4G systems. The Next Generation Mobile Network (NGMN) board has decided to focus the future NGMN activities on defining the end-to-end requirements for 5G new radio (NR) systems (5GS).

In 5G, a Protocol Data Unit (PDU) session defines the association between the UE and the data network that provides a PDU connectivity service. The PDU session establishment is a parallel procedure of PDN connection (bearer) procedure in 4G/LTE. Each PDU session is identified by a PDU session ID (PSI), and may include multiple QoS flows and QoS rules. Each PDU session can be established via a 5G Access Network (e.g., a 3GPP radio access network (RAN), or a non-3GPP RAN). The network/UE can initiate different PDU session procedures, e.g., PDU session establishment, PDU session modification, and PDU session release.

Operators are seeking ways to balance data traffic between mobile cellular networks and non-3GPP access in a way that is transparent to users and reduces mobile network congestion. In 5GS, UEs that can be simultaneously connected to both 3GPP access and non-3GPP access (using 3GPP NAS signalling), thus the 5GS is able to take advantage of these multiple accesses to improve the user experience, optimize the traffic distribution across various accesses. Accordingly, 3GPP introduced Multi-Access (MA) PDU session in 5GS. A MA PDU session uses one 3GPP access network or one non-3GPP access network at a time, or simultaneously one 3GPP access network and one non-3GPP access network.

In addition, ATSSS (Access Traffic Steering, Switching, Splitting) is an optional feature that can be supported by the UE and the 5GC network to route data traffic across 3GPP access and non-3GPP access networks for the established MA PDU session. An ATSSS-capable UE establishes an MA PDU session supporting multi-access connectivity over 3GPP access and non-3GPP access networks. At any given time, the MA PDU session can have user-plane resources established on both 3GPP access (also referred as 3GPP 5GS leg) and non-3GPP access (also referred as non-3GPP leg), or on one access only (either 3GPP access or non-3GPP 5GS access).

In certain networks, LTE has more coverage than NR, and sometimes UE are not able to establish 3GPP 5GS leg for an MA PDU session when NR coverage is unavailable. Therefore, it is beneficial that a 4G EPS PDN connection can be established as the user-plane resource for a corresponding MA PDU session over 3GPP access (also referred as 3GPP PDN leg). However, it becomes a challenge for a UE to determine whether the parameters of the adding 3GPP PDN leg are compatible with the stored parameters of an existing MA PDU session that already has a non-3GPP leg, and how the UE handles when the UE determines the parameters are not compatible.

A solution is sought.

### SUMMARY

A method of handling multi-access (MA) Protocol data unit (PDU) session establishment procedure for adding a 3GPP PDN leg to an MA PDU session already established with a non-3GPP leg is proposed. In one novel aspect, for a 5GS MA PDU session already established on/over non-3GPP access, upon receipt of an ACTIVATE DEFAULT EPS BEARER CONTEXT REQUEST message for the purpose of establishing a PDN connection as a user-plane resource for the MA PDU session (over 3GPP access), the UE performs a local release of the MA PDU session if any value of at least one of the critical MA PDU session parameters, including the PDN type, ESM cause, PDN address, S-NSSAI, and APN IEs in the ACTIVATE DEFAULT EPS BEARER CONTEXT REQUEST message does not match to the corresponding stored value of the MA PDU session already established over non-3GPP access, and including the stored SELECTED SSC MODE of the MA PDU session already established over non-3GPP access is not set to SSC mode 1. The UE also performs a registration procedure for mobility and periodic registration update with a REGISTRATION REQUEST message including a PDU session status IE sent over non-3GPP access and performs a tracking area updating procedure with a TRACKING AREA UPDATE REQUEST message including EPS bearer context IE sent over EPS (i.e., 4G 3GPP access).

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates an exemplary 5G network supporting adding 3GPP PDN leg to a Multi-Access Protocol Data Unit (MA PDU) session with non-3GPP leg in accordance with one novel aspect.
Figure 2 illustrates simplified block diagrams of a user equipment (UE) and a network entity in accordance with embodiments of the current invention.
Figure 3 illustrates the different procedures for registration to 5GS over 3GPP and non-3GPP accesses, establishing an MA PDU session with a non-3GPP leg, and adding a 3GPP PDN leg to the MA PDU session.
Figure 4 illustrates a sequence flow between a UE and a 5GS network for establishing an MA PDU over both EPS 3GPP access and 5GS non-3GPP access, and abnormal error handling in one novel aspect.
Figure 5 is a flow chart of a method of adding a 3GPP PDN leg to a multi-access (MA) Protocol data unit (PDU) session having a non-3GPP leg and corresponding error handling in accordance with one novel aspect.

### DETAILED DESCRIPTION

Reference will now be made in detail to some embodiments of the invention, examples of which are illustrated in the accompanying drawings.

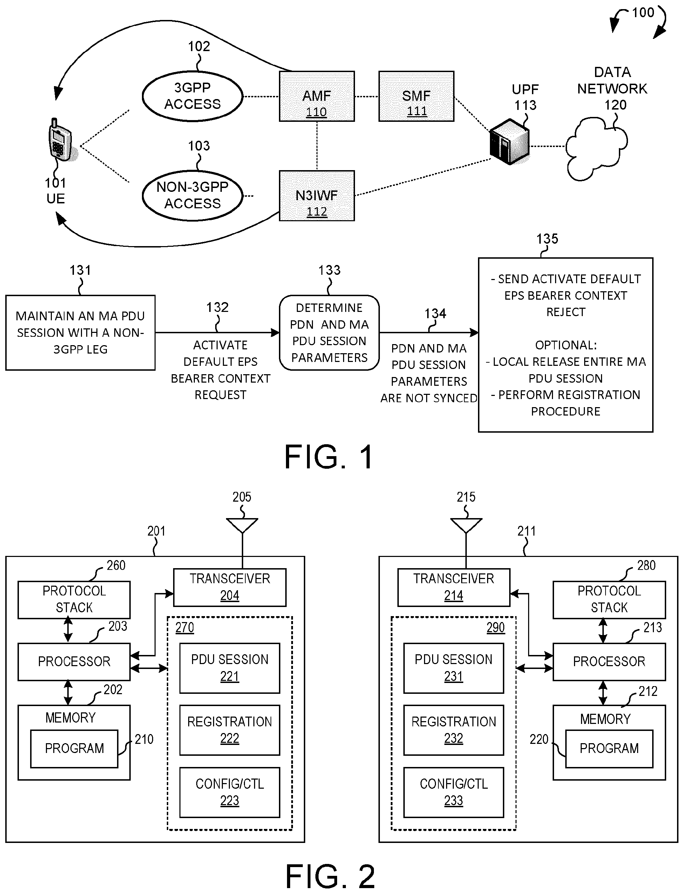

Figure 1 illustrates an exemplary 5G network 100 supporting adding non-3GPP leg to a Multi-Access Protocol Data Unit (MA PDU) session with 3GPP PDN leg in accordance with one novel aspect. 5G network 100 comprises a user equipment UE 101, a 3GPP radio (e.g., NR) access network RAN 102, a non-3GPP radio access network RAN 103, an Access and Mobility Management Function (AMF) 110, a Session Management Function (SMF) 111, a Non-3GPP Interworking Function (N3IWF) 112, a User-plane Function (UPF) 113, and a data network 120. The AMF communicates with the base station, SMF and UPF for access and mobility management of wireless access devices in mobile communication network 100. The SMF is primarily responsible for interacting with the decoupled data plane, creating, updating, and removing Protocol Data Unit (PDU) sessions and managing session context with the UPF. The N3IWF functionality interfaces to 5G core network control plane functions, responsible for routing messages outside 5G RAN.

In Access Stratum (AS) layer, RAN provides radio access for UE 101 via a radio access technology (RAT). In Non-Access Stratum (NAS) layer, AMF and SMF communicate with RAN and 5GC for access and mobility management and PDU session management of wireless access devices in 5G network 100. 3GPP Radio access network RAN 102 may include base stations (gNBs or eNB) providing radio access for UE 101 via various 3GPP RATs including 5G, 4G, and 3G/2G. Non-3GPP radio access network RAN 103 may include access points (APs) providing radio access for UE 101 via non-3GPP including WiFi. UE 101 can obtain access to data network 120 through 3GPP access 102, AMF 110, SMF 111, and UPF 113. UE 101 can obtain access to data network 120 through non-3GPP access 103, N3IWF 112, AMF 110, SMF 111, and UPF 113. UE 101 may be equipped with a single radio frequency (RF) module or transceiver or multiple RF modules or transceivers for services via different RATs/CNs. UE 101 may be a smart phone, a wearable device, an Internet of Things (IoT) device, a tablet, etc.

EPS networks are packet-switched (PS) Internet Protocol (IP) networks. This means that the networks deliver all data traffic in IP packets, and provide users with Always-On IP Connectivity. When UE joins an EPS network, a Packet Data Network (PDN) address (i.e., the one that can be used on the PDN) is assigned to the UE for its connection to the PDN. In 4G, EPS has defined a Default EPS Bearer to provide the IP Connectivity that is Always-On. In 5G, a Protocol Data Unit (PDU) session establishment procedure is a parallel procedure of a PDN connection procedure in 4G. A PDU session defines the association between the UE and the data network that provides a PDU connectivity service. Each PDU session is identified by a PDU session ID (PSI), and may include multiple QoS flows and QoS rules.

Each PDU session can be established over a 3GPP RAN, or over a non-3GPP RAN for radio access. 5G Session management (5GSM) for PDU sessions over both 3GPP access and non-3GPP access are managed by AMF and SMF via NAS signaling. Operators are seeking ways to balance data traffic between mobile networks and non-3GPP access in a way that is transparent to users and reduces mobile network congestion. In 5GS, UEs that can be simultaneously connected to both 3GPP access and non-3GPP access (using 3GPP NAS signalling), thus the 5GS is able to take advantage of these multiple accesses to improve the user experience, optimize the traffic distribution across various accesses. Accordingly, 3GPP introduced Multi-Access (MA) PDU session in 5GS. A MA PDU session uses one 3GPP access network or one non-3GPP access network at a time, or simultaneously one 3GPP access network and one non-3GPP access network.

In addition, the UE and the network can support Access Traffic Steering Switching and Splitting (ATSSS) functionalities to distribute traffic over 3GPP access and non-3GPP access for the established MA PDU session. An ATSSS capable UE establishes an MA PDU session supporting multi-access connectivity over 3GPP access and non-3GPP access networks. At any given time, the MA PDU session can have user-plane resources established on both 3GPP access (referred as 3GPP 5GS leg) and non-3GPP access (referred as non-3GPP leg), or on one access only (either 3GPP access or non-3GPP 5GS access). In certain networks, LTE has more coverage than NR, and sometimes UE are not able to establish 3GPP 5GS leg for an MA PDU session when NR coverage is unavailable. Therefore, it is beneficial that a 4G EPS PDN connection can be established as the user-plane resource for a corresponding MA PDU session over 3GPP access (referred as 3GPP PDN leg).

For an MA PDU session establishment, it becomes a challenge on adding a 3GPP PDN leg to an existing MA PDU session that already has a non-3GPP leg. In accordance with one novel aspect, a method of handling MA PDU session establishment procedure with an ACTIVATE DEFAULT EPS BEARER CONTEXT REQUEST message for adding a 3GPP PDN leg to an MA PDU session with a non-3GPP leg is proposed. UE 101 is registered to 5GC via 4G EPS/EPC for 3GPP access as well as registered to 5GC via WiFi for non-3GPP access. In step 131, UE 101 maintains an MA PDU session with user-plane resources established over non-3GPP access (non-3GPP leg). In order to establish a PDN connection as a user-plane resource of the already established MA PDU session, in step 132, UE 101 initiates a UE-requested PDN connectivity procedure, by sending a PDN CONNECTIVITY REQUEST message. UE 101 then receives an ACTIVATE DEFAULT EPS BEARER CONTEXT REQUEST message of a default EPS bearer context activation procedure as a response to the PDN CONNECTIVITY REQUEST message. The default EPS bearer parameters in the ACTIVATE DEFAULT EPS BEARER CONTEXT REQUEST need to be fully synced with the stored PDU session parameter of the already established MA PDU session with non-3GPP leg.

In step 133, UE 101 determines and compares the critical parameters of the PDN connection and the parameters of the existing MA PDU session with non-3GPP leg. In step 134, UE 101 detects that at least one of the critical parameters of the PDN connection (e.g., PDN address) are not synced with the parameters of the MA PDU session with non-3GPP leg (e.g., PDU address). Then, it is proposed that, in step 135, UE 101 sends an ACTIVATE DEFAULT EPS BEARER CONTEXT REJECT message to the network. Optionally, UE 101 may perform a local release of the MA PDU session and the registration procedure for mobility and periodic registration update with a REGISTRATION REQUEST message including the PDU session status IE sent over non-3GPP access.

Figure 2 illustrates simplified block diagrams of wireless devices, e.g., a UE 201 and a network entity 211 in accordance with embodiments of the current invention. Network entity 211 may be a base station and/or an AMF/SMF. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes protocol stack 280 and a set of control functional modules and circuitry 290.

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor in associated with software may be used to implement and configure features of UE 201.

UE 201 also comprises a set of functional modules and control circuitry to carry out functional tasks of UE 201. Protocol stacks 260 comprise Non-Access-Stratum (NAS) layer to communicate with an AMF/SMF/MME entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. System modules and circuitry 270 may be implemented and configured by software, firmware, hardware, and/or combination thereof. The function modules and circuits, when executed by the processors via program instructions contained in the memory, interwork with each other to allow UE 201 to perform embodiments and functional tasks and features in the network.

In one embodiment, system modules and circuits 270 comprise PDU session handling circuit 221 that performs PDU session establishment and modification procedures with the network, a registration handling circuit 222 that performs registration with the network via 3GPP or non-3GPP access, and a configuration and control circuit 223 that handles configuration and control parameters for mobility management and session management. In one example, UE 201 initiates adding a 3GPP PDN leg to an existing MA PDU session that already has a non-3GPP PDN leg. UE 201 receives an ACTIVATE DEFAULT EPS BEARER CONTEXT REQUEST message for adding a PDN connection as a user-plane resource for the MA PDU session. UE 201 sends an ACTIVATE DEFAULT EPS BEARER CONTEXT REJECT message if any of the critical parameters of the PDN connection is different from the corresponding stored parameters of the MA PDU session. UE 201 may also perform a local release of the MA PDU session and a registration procedure for mobility and periodic registration update with a REGISTRATION REQUEST message including a PDU session status IE that is sent over non-3GPP access.

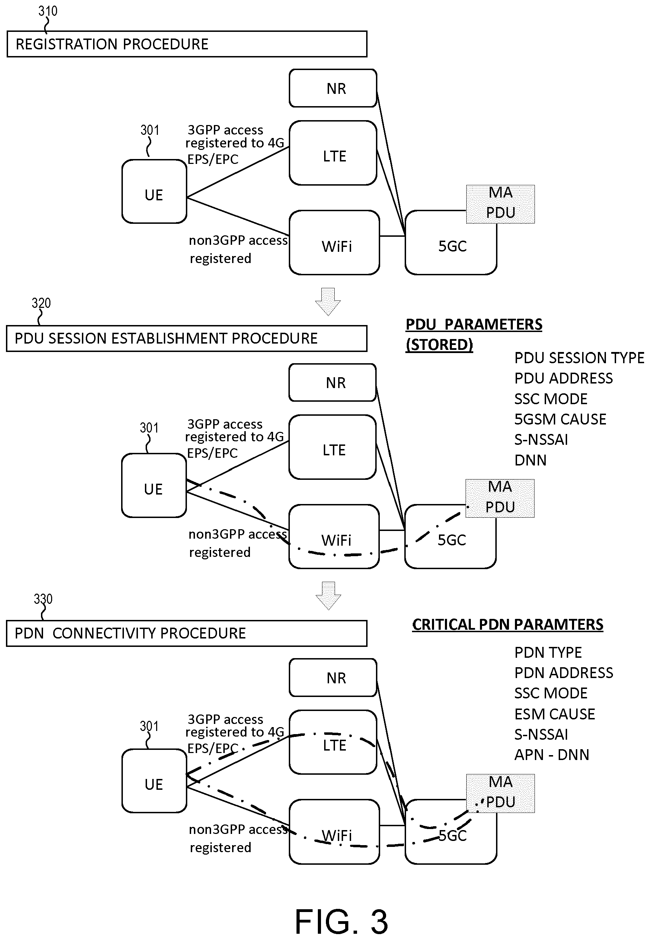

Figure 3 illustrates the different procedures for registration to 5GS over 3GPP and non-3GPP accesses, establishing an MA PDU session with a non-3GPP leg, and adding a 3GPP PDN leg to the MA PDU session. An MA PDU session in 5GS can be established after a UE is registered to the network over both 3GPP access type and non-3GPP access type. The UE can establish a MA PDU session by initiating a PDU session establishment procedure with the network over either 3GPP or non-3GPP access type and activating the MA PDU session. The activation of the MA PDU connectivity service refers to the establishment of user-plane resources on both 3GPP access and non-3GPP access. UE can also establish a MA PDU session by initiating a PDN connectivity procedure, where the PDN connection can be established as the user-plane resource for the MA PDU session.

In the embodiment of Figure 3, UE 301 first performs registration procedure (310). UE 301 is registered to 4G via 4G EPS/EPC (LTE) for 3GPP access, and is registered to 5GC via WiFi for non-3GPP access. Note that UE 301 may not be registered to 5GC via NR for 3GPP access. Next, UE 301 performs PDU session establishment procedure for the purpose of establishing an MA PDU session (320). UE 301 establishes user-plane resources of the MA PDU session over non-3GPP access. Afterward, UE 301 considers that the MA PDU session is established based on parameters in a PDU SESSION ESTABLISHMENT ACCEPT message from the network. UE 301 stores corresponding MA PDU session parameters including: PDU session type, PDU address, SSC mode, 5GSM cause, S-NSSAI, and DNN.

Next, in step 330, UE 301 initiates a UE-requested PDN connectivity procedure in order to establish a PDN connection as a user-plane resource of the already established MA PDU session. UE 301 sends a PDN CONNECTIVITY REQUEST message, and receives an ACTIVATE DEFAULT EPS BEARER CONTEXT REQUEST message of a default EPS bearer context activation procedure as a response to the PDN CONNECTIVITY REQUEST message. The UE considers that the PDN connection is established as a user-plane resource of the MA PDU session. Otherwise, upon receipt of a PDN CONNECTIVITY REJECT message, the UE considers that the PDN connection is not established as a user-plane resource of the MA PDU session.

UE 301 needs to determine that if any of the critical parameters of the PDN connection and of the existing MA PDU session are matched/compatible/synced. The critical PDN parameters include at least one of PDN/PDU type, PDN/PDU address, SSC mode, ESM/5GSM cause, S-NSSAI, and APN/DNN. If any mismatch/un-compatible/in-synced is detected, then UE 301 should send ACTIVATE DEFAULT EPS BEARER CONTEXT REJECT message to the network. Optionally, UE 301 may perform a local release of the MA PDU session and the registration procedure for mobility and periodic registration update with a REGISTRATION REQUEST message including the PDU session status IE sent over non-3GPP access.

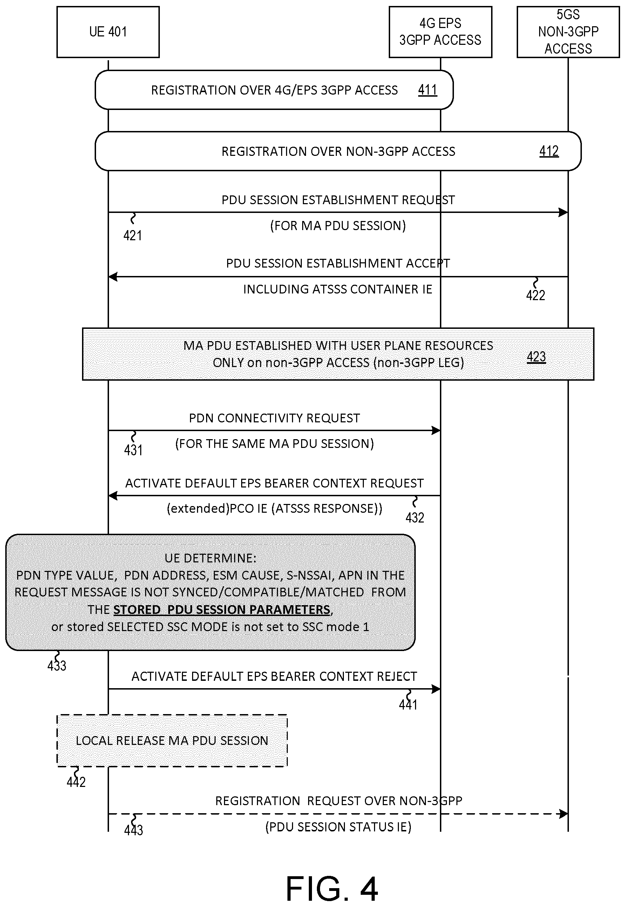

Figure 4 illustrates a sequence flow between a UE and a 5GS network for establishing an MA PDU over both EPS 3GPP access and 5GS non-3GPP access, and abnormal error handling in one novel aspect. In step 411, UE 401 performs registration (attach) with the 4G EPS network. In step 412, UE 401 performs registration with the 5GS network over non-3GPP access. In step 421, UE 401 sends a PDU SESSION ESTABLISHMENT REQUEST message to 5GS over non-3GPP access, indicating a PDU session ID (e.g., PDU session ID ==5) and a Request type == MA PDU for establishing user-plane resources for the MA PDU session on/over non-3GPP access. In step 422, UE 401 receives a PDU SESSION ESTABLISHMENT ACCEPT message over non-3GPP access from 5GS for the MA PDU session. The accept message includes ATSSS container IE, and includes a set of MA PDU session parameters, e.g., PDU session type, PDU address, selected SSC mode, 5GSM cause, S-NSSAI, and DNN IEs. In step 423, UE 401 considers that the MA PDU session is established, having the user-plane resources established on/over non-3GPP access.

Once the MA PDU session is established with a non-3GPP leg, UE 401 then wants to add a 3GPP PDN leg to the existing MA PDU session (PDU session ID ==5). In step 431, UE 401 initiates a UE-requested PDN connectivity procedure to establish a PDN connection as a user-plane resource of the MA PDU session. UE 401 sends a PDN CONNECTIVITY REQUEST message to 4G EPS. In the PDN CONNECTIVITY REQUEST message or, when applicable, in the ESM INFORMATION RESPONSE message, of the UE requested PDN connectivity procedure, the UE sets the request type to "handover", sets the PDN Type IE to "IPv4", "IPv6", "IPv4v6", "Ethernet" or "non-IP". In the protocol configuration options (PCO) or extended PCO IE of the PDN CONNECTIVITY REQUEST message, the UE includes the ATSSS request PCO parameter. In step 432, UE 401 receives an ACTIVATE DEFAULT EPS BEARER CONTEXT REQUEST message of a default EPS bearer context activation procedure from the EPS network, as a response to the PDN CONNECTIVITY REQUEST message. The ACTIVATE DEFAULT EPS BEARER CONTEXT REQUEST message contains the extended PCO IE with the ATSSS response having the length of two octets PCO parameter.

In step 433, UE 401 determines whether the default EPS bearer parameters in the ACTIVATE DEFAULT EPS BEARER CONTEXT REQUEST message are matched/synced/compatible with the stored PDU session parameters of the already established MA PDU session with non-3GPP leg. Specifically, UE 401 determines if any of the critical parameters of the PDN connection matches with the corresponding MA PDU session parameters. The critical parameters match includes at least one of the following: 1) the "PDN type value" of the PDN address IE is set to i) "IPv4" and the stored PDU session type of the MA PDU session is set to "IPv4"; ii) "IPv6" and the stored PDU session type of the MA PDU session is set to "IPv6"; iii) "IPv4v6" and the stored PDU session type of the MA PDU session is set to "IPv4v6"; or iv) "Ethernet" and the stored PDU session type of the MA PDU session is set to "Ethernet"; 2) the PDN address in "PDN address information" of the PDN address IE is the same as the stored PDU address of the MA PDU session; 3) the stored selected SSC mode of the MA PDU session is set to "SSC mode 1"; 4) the ESM cause IE is: i) not included and there is no stored 5GSM cause of the MA PDU session; ii) set to #50 "PDN type IPv4 only allowed" and the stored 5GSM cause of the MA PDU session is set to #50 "PDU session type IPv4 only allowed"; iii) set to #51 "PDN type IPv6 only allowed" and the stored 5GSM cause of the MA PDU session is set to #51 "PDU session type IPv6 only allowed"; or iv) set to #52 "single address bearers only allowed" and there is no stored 5GSM cause of the MA PDU session; 5) the S-NSSAI is included by the network in the Protocol configuration options IE or Extended protocol configuration options IE and is the same as the stored S-NSSAI value of the MA PDU session; and 6) the APN maps to the same DNN as the stored DNN of the MA PDU session.

If at least one of the critical parameters does not match/sync/compatible the corresponding stored parameter, then the MA PDU session may not function properly and the UE has no way to know how to choose (trust) between the parameters of the PDN leg and the parameters of the non-3GPP leg (sometimes the parameters in the ACTIVATE DEFAULT EPS BEARER CONTEXT REQUEST message (PDN leg) are correct, but sometimes the parameters stored in the MA PDU session (non-3GPP leg) are correct; however the UE has no way to know which parameters are correct). For example, the same MA PDU session cannot have different PDU addresses. Thus, in step 441, UE 401 sends an ACTIVATE DEFAULT EPS BEARER CONTEXT REJECT message to the network. In addition, UE 401 may locally release the MA PDU session (step 442) and perform a registration procedure for mobility and periodic registration update by sending a REGISTRATION REQUEST message including PDU session status IE to the network over non-3GPP access. Specifically, the status IE is sent to 5GS over non-3GPP access to indicate to the network that the user-plane resources of the MA PDU session on non-3GPP access are released at the UE side.

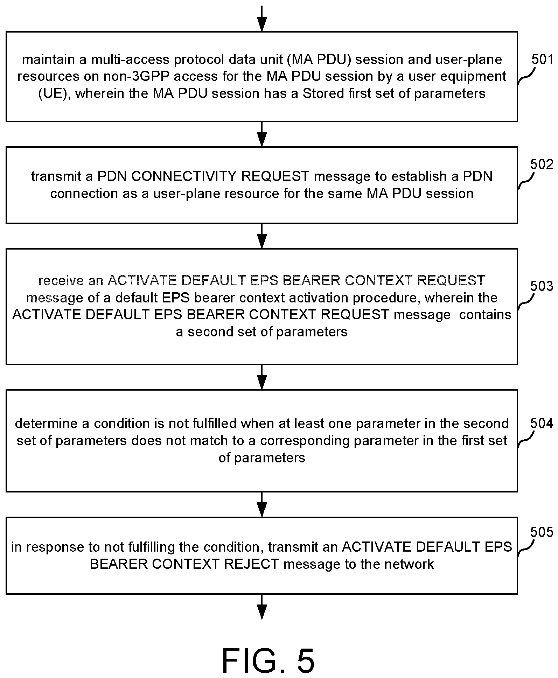

Figure 5 is a flow chart of a method of adding a PDN leg to a multi-access (MA) Protocol data unit (PDU) session having a non-3GPP leg and corresponding error handling in accordance with one novel aspect. In step 501, a UE maintains a multi-access protocol data unit (MA PDU) session and user-plane resources over non-3GPP access for the MA PDU session, wherein the MA PDU session has a stored first set of parameters stored in the UE. In step 502, the UE transmits a PDN CONNECTIVITY REQUEST message to establish a PDN connection as a user-plane resource for the same MA PDU session. In step 503, the UE receives an ACTIVATE DEFAULT EPS BEARER CONTEXT REQUEST message of a default EPS bearer context activation procedure, wherein the ACTIVATE DEFAULT EPS BEARER CONTEXT REQUEST message contains a second set of parameters. In step 504, the UE determines a condition is not fulfilled when at least one parameter in the second set of parameters does not match/sync/compatible to a corresponding parameter in the first set of parameters. In step 505, in response to not fulfilling the condition, the UE transmits an ACTIVATE DEFAULT EPS BEARER CONTEXT REJECT message to the network. The UE MAY locally release the MA PDU session and perform registration update for non-3GPP access.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
maintaining a multi-access protocol data unit, MA PDU, session and user-plane resources over non-3GPP access for the MA PDU session by a user equipment, UE, wherein the MA PDU session has a stored first set of parameters;
transmitting a PDN CONNECTIVITY REQUEST message to establish a PDN connection as a user-plane resource for the same MA PDU session;
receiving an ACTIVATE DEFAULT EPS BEARER CONTEXT REQUEST message of a default EPS bearer context activation procedure, wherein the ACTIVATE DEFAULT EPS BEARER CONTEXT REQUEST message contains a second set of parameters;
determining a condition is not fulfilled when at least one parameter in the second set of parameters does not match to a corresponding parameter in the first set of parameters; and
in response to not fulfilling the condition, transmitting an ACTIVATE DEFAULT EPS BEARER CONTEXT REJECT message to the network.

2. The method of Claim 1, wherein the UE locally releases the MA PDU session and performs a registration procedure for mobility and periodic registration update over non-3GPP access.

3. The method of Claim 2, wherein a PDU session status IE is included in the REGISTRATION REQUEST message of the registration procedure for mobility and periodic registration update.

4. The method of Claim 3, wherein the PDU session status IE is for indicating to the network that the user-plane resources established over non-3GPP access for the MA PDU session are released.

5. The method of Claim 1, wherein the condition comprises a PDN type value of the ACTIVATE DEFAULT EPS BEARER CONTEXT REQUEST message is the same as a stored PDU session type of the MA PDU session of the first set of parameters; or wherein the condition comprises a PDN address of the ACTIVATE DEFAULT EPS BEARER CONTEXT REQUEST message is the same as a stored PDU address of the MA PDU session of the first set of parameters.

6. The method of Claim 1, wherein the condition comprises a stored selected SSC mode of the MA PDU session of the first set of parameters is set to "SSC mode 1".

7. The method of Claim 1, wherein the condition comprises an EPS session management, ESM, cause of the ACTIVATE DEFAULT EPS BEARER CONTEXT REQUEST message matches to an 5G session management, 5GSM, cause of the MA PDU session of the first set of parameters, or ESM cause is included and set to single address bearers only allowed and no 5GSM cause of the MA PDU session of the first set of parameters is stored, or ESM cause is not included and no 5GSM cause of the MA PDU session of the first set of parameters is stored.

8. The method of Claim 1, wherein the condition comprises an S-NSSAI value of the ACTIVATE DEFAULT EPS BEARER CONTEXT REQUEST message is the same as a stored S-NSSAI value of the MA PDU session of the first set of parameters; or
wherein the condition comprises an APN of the ACTIVATE DEFAULT EPS BEARER CONTEXT REQUEST message maps to the same DNN as the stored DNN of the MA PDU session of the first set of parameters.

9. A User Equipment, UE, comprising:
a connection handling circuit that is configured to maintain a multi-access protocol data unit, MA PDU, session and user-plane resources over non-3GPP access for the MA PDU session, wherein the MA PDU session has a stored first set of parameters;
a transmitter that is configured to transmit a PDN CONNECTIVITY REQUEST message to establish a PDN connection as a user-plane resource for the same MA PDU session;
a receiver that is configured to receive an ACTIVATE DEFAULT EPS BEARER CONTEXT REQUEST message of a default EPS bearer context activation procedure, wherein the ACTIVATE DEFAULT EPS BEARER CONTEXT REQUEST message contains a second set of parameters;
a control circuit that is configured to determine a condition is not fulfilled when at least one parameter in the second set of parameters does not match to a corresponding parameter in the first set of parameters, and in response to not fulfilling the condition, to transmit an ACTIVATE DEFAULT EPS BEARER CONTEXT REJECT message to the network.

10. The UE of Claim 9, wherein the UE is configured to locally release the MA PDU session and to perform a registration procedure for mobility and periodic registration update over non-3GPP access.

11. The UE of Claim 10, wherein a PDU session status IE is included in the REGISTRATION REQUEST message of the registration procedure for mobility and periodic registration update.

12. The method of Claim 11, wherein the PDU session status IE is for indicating to the network that the user-plane resources established over non-3GPP access for the MA PDU session are released.

13. The UE of Claim 9, wherein the condition comprises a PDN type value of the ACTIVATE DEFAULT EPS BEARER CONTEXT REQUEST message is the same as a stored PDU session type of the MA PDU session of the first set of parameters; or wherein the condition comprises a PDN address of the ACTIVATE DEFAULT EPS BEARER CONTEXT REQUEST message is the same as a stored PDU address of the MA PDU session of the first set of parameters.

14. The UE of Claim 9, wherein the condition comprises a stored selected SSC mode of the MA PDU session of the first set of parameters is set to "SSC mode 1".

15. The UE of Claim 9, wherein the condition comprises an EPS session management, ESM, cause of the ACTIVATE DEFAULT EPS BEARER CONTEXT REQUEST message matches to an 5G session management, 5GSM, cause of the MA PDU session of the first set of parameters, or ESM cause is included and set to single address bearers only allowed and no 5GSM cause of the MA PDU session of the first set of parameters is stored, or ESM cause is not included and no 5GSM cause of the MA PDU session of the first set of parameters is stored.

16. The UE of Claim 9, wherein the condition comprises an S-NSSAI value of the ACTIVATE DEFAULT EPS BEARER CONTEXT REQUEST message is the same as a stored S-NSSAI value of the MA PDU session of the first set of parameters; or
wherein the condition comprises an APN of the ACTIVATE DEFAULT EPS BEARER CONTEXT REQUEST message maps to the same DNN as the stored DNN of the MA PDU session of the first set of parameters.
